# EUROPÄISCHE PATENTSCHRIFT

(11) **EP 1 831 233 B1**
(45) Veröffentlichungstag und Bekanntmachung des Hinweises auf die Patenterteilung: **23.04.2008**
(21) Anmeldenummer: 05821210.1
(22) Anmeldetag: 24.11.2005
(51) Int. Cl.: C07F 7/18

(54) **VERFAHREN ZUR KONTINUIERLICHEN HERSTELLUNG VON AMINO-GRUPPEN TRAGENDEN SILICIUM-VERBINDUNGEN**
METHOD FOR THE CONTINUOUS PRODUCTION OF SILICON COMPOUNDS CARRYING AMINO GROUPS
PROCEDE POUR PRODUIRE EN CONTINU DES COMPOSES DE SILICIUM PORTANT DES GROUPES AMINO

(30) Priorität: 16.12.2004 DE 102004060627
(43) Veröffentlichungstag der Anmeldung: 12.09.2007
(73) Patentinhaber: Wacker Chemie AG, 81737 München (DE)
(72) Erfinder: KORNEK, Thomas, 84489 Burghausen (DE); RAUCH, Jochen, 90443 Nürnberg (DE)
(74) Vertreter: Fritz, Helmut
(86) Internationale Anmeldenummer: PCT/EP2005/012586
(87) Internationale Veröffentlichungsnummer: WO 2006/063667

(56) Entgegenhaltungen:
- EP-A- 0 527 007
- EP-A- 0 702 017
- EP-A- 1 209 162
- WO-A-01/85737
- WO-A-02/066532
- WO-A-20/05047298
- DE-A1- 1 812 564
- GB-A- 686 068

## Beschreibung

Die Erfindung betrifft ein Verfahren zur kontinuierlichen Herstellung von (N-Organylaminoorganyl)- und (N,N-Diorganylaminoorganyl)triorganylsilanen aus entsprechenden (Triorganylsilylorganyl)halogeniden und N-Organyl- bzw. N,N-Diorganylaminen.

Aus dem Stand der Technik sind verschiedene Verfahren zur Herstellung von (N-Organylaminoorganyl)- und (N,N-Diorganylaminoorganyl)triorganylsilanen bekannt. Von den bislang beschriebenen Verfahren hat sich die Umsetzung von (Halogenorganyl)silanen mit entsprechenden Aminen hinsichtlich verfahrenstechnischer und wirtschaftlicher Aspekte als mit weitem Abstand am günstigsten erwiesen.

Vorteilhaft ist hierbei vor allem die hohe Verfügbarkeit von (Chloralkyl)silanen, die mittels Photochlorierung von Alkylsilanen oder Hydrosilylierung von entsprechenden Halogensubstituierten Olefinen an Si-H-haltige Verbindungen erhältlich sind und beispielsweise als Zwischenprodukte für die Synthese einer Vielzahl von organofunktionellen Silanen Verwendung finden. Weiterhin kann bei diesem Verfahren auf eine große Zahl gut verfügbarer primärer und sekundärer Amine zum Aufbau der (N-Organylaminoorganyl)- und (N,N-Diorganylaminoorganyl)triorganylsilane zurückgegriffen werden, was einen sehr weiten Anwendungsbereich des Verfahrens und dadurch kostengünstige Produktwechsel auf bestehenden technischen Fertigungsanlagen ermöglicht.

Aus GB 686,068 A sind (Amino)-, (N-Organylamino)-, und (N,N-Diorganylaminomethyl)- oder (N,N-Diorganylaminoethyl)triorganylsilane bekannt. Weiterhin beschreibt GB 686,068 A ein Verfahren zur Umsetzung von entsprechenden (Chlormethyl)- oder (Brommethyl)triorganosilanen mit Ammoniak, einem primären oder sekundären Amin bei Temperaturen von mindestens 50°C zur Herstellung besagter (Aminoorganyl)-, (N-Organylaminoorganyl)- und (N,N-Diorganylaminoorganyl)triorganylsilane. Dabei wurden in der Regel die (Chlormethyl)- oder (Brommethyl)triorganosilane in einem Kolben oder Autoklaven, abhängig von den Siedepunkten der eingesetzten Amin-Verbindungen, vorgelegt und auf Temperaturen über 100°C, vorzugsweise 110 - 130°C erwärmt. Im Falle höher siedender Amine (z. B. Cyclohexylamin) wurde die Mischungsreihenfolge umgekehrt und die (Chlormethyl)- oder (Brommethyl)triorganosilane zum erwärmten Amin zugegeben. Die Reaktionszeit betrug in Abhängigkeit der umzusetzenden Amin-Verbindung 2 bis 8 Stunden.

Die (Aminomethyl)silanderivate werden nach dem in DE 1812564 A1 beschriebenen Verfahren durch Umsetzung eines (Chlormethyl)- oder (Brommethyl)silanderivats mit Ammoniak oder einem primären Amin hergestellt. Die Umsetzung erfolgt bei Temperaturen von 80 oder 100°C in einem Zeitraum von 3 bzw. 2 Stunden, wobei das Amin im molaren Überschuss von 1 : 3,2 - 6 bereits zu Beginn der Reaktion vollständig vorgelegt wurde.

Die in GB 686068 A und DE 1812564 A1 beschriebenen Verfahren weisen vergleichsweise lange Reaktionszeiten von mehreren Stunden auf. Die erzielbaren Ausbeuten sind dennoch gering, was unter anderem eine Folge der langen Reaktionszeiten und der damit verbundenen erhöhten Bildung von Nebenprodukten ist (vgl. hierzu unten). Die Produkte werden weiter nicht in der benötigten Reinheit erhalten und müssen vor ihrer weiteren Verwendung aufwändig gereinigt werden. Beispielsweise enthalten die gemäß des beschriebenen Verfahrens erhaltenen Produkte große Mengen an ionogenem Chlorid oder Bromid. Dies schränkt deren technische Verwendung ohne Aufreinigung, beispielsweise in Dichtmassen, die auf metallischen Oberflächen aufgebracht werden, u. a. durch Förderung der Korrosionsbildung stark ein.

Als Chlorid- oder Bromid-haltige Verunreinigungen treten hierbei vor allem die Hydrochloride oder -bromide der bei der Synthese eingesetzten Amine oder auch die Hydrochloride oder -bromide der Zielverbindungen auf.

In diesem Zusammenhang wurde beobachtet, dass Mischungen von (Aminomethyl)silanen und solchen Hydrochloriden oder -bromiden bei höheren Temperaturen, wie sie beispielsweise während der Herstellung und auch zur destillativen Aufreinigung der Zielverbindungen notwendig sind, zur unerwünschten und exothermen Zersetzung der Zielverbindungen unter Bruch der Si-C-Bindung und gleichzeitiger Bildung entsprechend N-methylierter Amine führen können. Die so gebildeten N-Methylamine beeinflussen in sehr unerwünschter Weise den Verfahrensverlauf. Dieser Effekt scheint mit der Basizität der Amin-Verbindung insoweit zu korrelieren, als mit abnehmender Basizität des entsprechenden (Aminomethyl)silans solche Zersetzungsreaktionen begünstigt werden. Aus diesem Grunde sind auch aus sicherheitstechnischer Sicht niedrige Halogenid-Gehalte der hier beschriebenen (Aminomethyl)silane notwendig.

Aus dem Stand der Technik sind Verfahren zur Reduktion von Halogenid-Gehalten in Alkoxysilanen bekannt, beispielsweise solche, die auf der Ausfällung des gelösten Halogenids durch Zugabe von Alkali- oder Erdalkali-Alkoholat-Salzen beruhen (z. B. EP 0702017 A1, DE 69306288 T2, DE 19513976 A1), doch sind hierbei zur einfachen und effizienten Verringerung des Halogenid-Gehalts überstöchiometrische Mengen der Salze notwendig, da durch stöchiometrische Mengen nicht die gewünschte vollständige Halogenid-Entfernung erzielt werden kann. Ungünstigerweise neigen jedoch alle bislang untersuchten (Aminomethyl)silane unter diesen Bedingungen, wie die gleichzeitige Gegenwart freier Alkohole und starker Basen, zu Zersetzungsreaktionen. Ein alternatives Verfahren, das Reduktionen von Chlorid-Gehalten in Alkoxy-Silanen durch Einleiten von Ammoniak ermöglichen soll, ist in DE 19941283 A1 beschrieben, doch werden in diesem Verfahren (Aminoalkyl)alkoxysilane explizit von der Anwendbarkeit ausgeschlossen.

Weiter wurde beobachtet, dass die genannte Zersetzung von (Aminomethyl)silanen nicht nur in Gegenwart von Hydrochloriden oder Alkoholen und Basen stattfindet, sondern insbesondere auch bereits die alleinige Anwesenheit von Alkoholen ausreichend sein kann, um die unerwünschte Bildung entsprechender N-Methylamine herbeizuführen. Die so gebildeten N-methylierten Amin-Derivate konkurrieren während der Umsetzung mit noch vorhandenem, nicht methylierten Amin um die Reaktion mit dem (Halogenmethyl)silan und führen schließlich zur Bildung von (N-Methylaminomethyl)silanen, die destillativ nicht mehr von den Zielverbindungen abgetrennt werden können. Zur Vermeidung dieser unerwünschten Nebenreaktion muss daher in der Reaktionsmischung auf die Abwesenheit von Alkoholen geachtet werden. Ist mindestens einer der Organyl-Reste am Silicium-Atom eine Alkoxygruppe, können nur wasserarme Amine in dem Verfahren zum Einsatz kommen, da ansonsten durch vorgelagerte Reaktion des Silans mit im Amin vorhandenen Wasser Alkohole freigesetzt werden können.

Weiterhin ist die in DE 1812564 A1 beschriebene Aufheizung der vollständig vorgemischten Lösung von Silan und Amin aufgrund der exothermen Reaktion der beiden Komponenten aus sicherheitstechnischen Gründen für eine großtechnische Umsetzung bedenklich.

Aus DE 10353063 ist ein verbessertes Verfahren zur Herstellung von (N-Organylaminoorganyl)- und (N,N-Diorganylaminoorganyl)triorganylsilanen bekannt, in dem das Ausgangssilan vorgelegt und erwärmt und anschließend das entsprechende Amin kontinuierlich zugegeben wurde.

Weiterhin konnten die Halogenid-Gehalte in den Zielverbindungen dadurch reduziert werden, dass unpolare Lösungsmittel den Rohmischungen zugegeben und die ausgefallenen Salze abgetrennt wurden.

Durch Einsatz wasserarmer Amine wurde die Freisetzung von Alkoholen während der Synthese und damit die Bildung der genannten Nebenprodukte unterbunden.

Überraschenderweise konnte bei Bedarf durch Umsalzung mit Ammoniak das während des Verfahrens gebildete Amin- bzw. (Aminomethyl)silan-Hydrohalogenid aus der Mischung entfernt werden, was weiterhin die Bildung der N-methylierten Nebenprodukte verhinderte.

Obwohl der Fachmann der Lehre von DE 19941283 A1 explizit das Gegenteil entnimmt, konnten überraschenderweise durch Einleiten von Ammoniak in das Roh- oder isolierte Endprodukt vorzugsweise chloridfreie (Aminomethyl)silane erhalten werden.

Das verbesserte in DE 10353063 beschriebene Verfahren wurde jedoch im Batch-Betrieb durchgeführt und bot insbesondere auf die Erhöhung der Raum/Zeit-Ausbeute und die erzielbare Produktqualität noch Optimierungspotential.

Es bestand somit die Aufgabe, ein weiteres Verfahren zur Herstellung von (N-Organylaminoorganyl)- und (N,N-Diorganylaminoorganyl)triorganylsilanen bereit zu stellen, das die aus dem Stand der Technik bekannten Probleme löst, insbesondere die Produkte bei kurzen Reaktionszeiten in hohen Ausbeuten und gleichzeitig hohen Reinheiten zugänglich macht.

Die Aufgabe konnte überraschenderweise dadurch gelöst werden, dass ein Verfahren entwickelt wurde, in dem das Ausgangssilan und das entsprechende wasserarme Amin in einem kontinuierlich betriebenen Reaktor mit niedrigen Verweilzeiten umgesetzt werden.

Gegenstand der Erfindung ist ein Verfahren zur Herstellung von (N-Organylaminoorganyl)- und (N,N-Diorganylaminoorganyl)triorganylsilanen der allgemeinen Formel (1)

R₃₋ₙR¹ₙSi-R²-NR³R⁴ (1)

wobei
- **R**: ein Kohlenwasserstoff- oder ein Alkoxyrest mit 1-10 C-Atomen, der gesättigt oder ungesättigt, verzweigt oder unverzweigt, substituiert oder unsubstituiert sein kann, bedeutet,
- **R¹**: ein Kohlenwasserstoffrest mit 1-10 C-Atomen, der gesättigt oder ungesättigt, verzweigt oder unverzweigt, substituiert oder unsubstituiert sein kann, bedeutet
- **R²**: ein Kohlenwasserstoffrest mit 1-10 C-Atomen, der gesättigt oder ungesättigt, verzweigt oder unverzweigt, substituiert oder unsubstituiert sein kann, bedeutet,
- **R³,R⁴**: Wasserstoff oder einen Kohlenwasserstoffrest mit 1-10 C-Atomen, der gesättigt oder ungesättigt, verzweigt oder unverzweigt, substituiert oder unsubstituiert sein kann, bedeuten, mit der Maßgabe, dass **R³,R⁴** gleich oder verschieden sein können und gegebenenfalls miteinander verbunden sind, wobei der resultierende Cyclus auch Heteroatome enthalten kann,
- **X**: Chlor, Brom oder Iod bedeutet
- **n**: eine Zahl gleich 1, 2 oder 3 bedeutet
durch Umsetzung von cyclischen oder acyclischen Aminen der allgemeinen Formel (2),

H-NR³R⁴ (2)

die einen Wassergehalt von 0 bis 20000 ppm aufweisen,
mit (Halogenorganyl)silanen der allgemeinen Formel (3)

R₃₋ₙR¹ ₙSi-R²-X (3)

dadurch gekennzeichnet, dass die Umsetzung die folgenden Schritte umfasst
a) gleichmäßige Zugabe des (Halogenorganyl)silans der allgemeinen Formel (3) und des Amins der allgemeinen Formel (2) in einen kontinuierlich betriebenen Reaktor
   bei einer Temperatur von 50 bis 250°C
   wobei die Verweilzeit der eingesetzten Reaktanden im Reaktor zwischen 1 min. und 120 min. beträgt und
   das Amin der allgemeinen Formel (2) mit einem 1- bis 100-fachen Überschuss eingesetzt wird,
b) und gegebenenfalls zusätzliche Zugabe von stickstoffhaltigen Verbindungen gleichzeitig oder zeitlich versetzt zur Zugabe des (Halogenorganyl)silans und des Amins und Abtrennung der entstandenen Addukte.

Kennzeichnendes Merkmal der Erfindung ist, dass die Umsetzung kontinuierlich erfolgt und in dem Verfahren das (Halogenorganyl)silan der allgemeinen Formel (3) gleichmäßig zu einem 1- bis 100-fachen Überschuss des Amins der allgemeinen Formel (2) bei einer Temperatur von 50 bis 250°C in einen kontinuierlich betriebenen Reaktor zugegeben wird, wobei die Verweilzeit des Silans im Reaktor zwischen 1 min. und 120 min. beträgt. Gegebenenfalls können optional solche stickstoffhaltigen Verbindungen zugegeben werden, die mit den primären gebildeten Hydrohalogeniden unter Umsalzung und gleichzeitigem Erhalt der zu Grunde liegenden Amine leicht abtrennbare flüssige oder feste Addukte bilden. Die optionale Zugabe der stickstoffhaltigen Verbindungen kann gleichzeitig oder zeitlich versetzt zur Zugabe des (Halogenorganyl)silans erfolgen.

Der optionale Schritt b) umfasst somit die Umsalzung der gebildeten Hydrohalogenide durch Zugabe von stickstoffhaltigen Verbindungen während oder nach der Zugabe des (Halogenorganyl)-silans und des Amins und die Abtrennung der entstandenen Ammoniumsalze nach beendeter Zugabe.

Als stickstoffhaltige Verbindungen gemäß dem optionalen Verfahrensschritt b) eignen sich grundsätzlich solche Verbindungen, die im Kontakt mit Halogenwasserstoffen leicht abzutrennende feste oder flüssige Addukte bilden. Besonders bevorzugt wird Ammoniak als stickstoffhaltige Verbindung zugegeben.

Durch die Zugabe der stickstoffhaltigen Verbindung, insbesondere von Ammoniak wird eine Umsalzung der gebildeten Hydrohalogenide erreicht und die dabei entstehenden Addukte, insbesondere Ammoniumsalze können einfach abgetrennt werden.

Die kontinuierliche Reaktionsführung hat gegenüber dem Batch-Betrieb den Vorteil, dass schwankende Produktzusammensetzungen, wie sie für Batch-Prozesse typisch sind, vermieden werden können. Die Reaktionszeiten können durch die kontinuierliche Reaktionsführung signifikant reduziert werden, was die Wirtschaftlichkeit des Verfahrens erhöht. Gleichermaßen kann durch die Verkürzung der Reaktionszeit die Bildung von unerwünschten Nebenprodukten weiter deutlich reduziert werden.

Das erfindungsgemäße Verfahren wird allgemein bei Temperaturen zwischen 50 und 250°C durchgeführt. Um einen Kompromiss zwischen wirtschaftlich sinnvollen Reaktionszeiten (Verweilzeiten) und einer zu möglichst wenig Nebenprodukten führenden Umsetzung zu erzielen, haben sich Temperaturen von 100 bis 220°C, insbesondere von 150°C bis 200°C als besonders vorteilhaft erwiesen. Bei deutlich niedrigeren Temperaturen verlängern sich die Reaktionszeiten (Verweilzeiten), bei höheren Temperaturen tritt deutlich mehr Nebenproduktbildung auf.

Bezogen auf die Silan-Komponente wird das Amin allgemein in molaren Verhältnissen von 1 bis 100, bevorzugt von 2 bis 50, besonders bevorzugt von 4 bis 20, insbesondere von 4 bis 10 eingesetzt.

Durch das erfindungsgemäße Verfahren können, in Abhängigkeit der gewählten Temperatur, Umsatzzeiten (im kontinuierlichen Betrieb besser beschrieben durch den Begriff "Verweilzeiten") im Bereich von wenigen Minuten erzielt werden. Die Verweilzeit kann allgemein 1 bis 120 min., bevorzugt 1 bis 60 min. betragen. Als besonders vorteilhaft haben sich Verweilzeiten von weniger oder gleich 10 min. erwiesen.

In einer besonders bevorzugten Ausführungsform des erfindungsgemäßen Verfahrens werden die Reaktionsparameter wie folgt gewählt: molares Verhältnis Silan-Komponente/Amin von 4 bis 20, insbesondere 4 bis 10; Temperatur 150 - 200°C, Verweilzeit von weniger oder gleich 10 min.

Da Mischungen der erhaltenen Zielprodukte mit bestimmten Amin-Hydrochloriden insbesondere bei höheren Temperaturen teilweise sehr exotherme Reaktionen zeigen, wird das Verfahren ggf. in Gegenwart eines Halogenwasserstofffängers durchgeführt, der die genannten Amin-Hydrochloride in ihre entsprechenden Amine überführt. Diese Ausführungsform ist bevorzugt. Bevorzugte Halogenwasserstofffänger sind hierbei Ammoniak sowie solche stickstoffhaltigen Verbindungen, die im Kontakt mit Halogenwasserstoffen leicht abzutrennende feste oder flüssige Addukte bilden.

Zur Durchführung des Verfahrens eignen sich alle dem Stand der Technik entsprechenden, kontinuierlich betreibbaren Reaktoren, wie beispielsweise Rohrreaktoren, Schleifenreaktoren, Rührkessel oder Kaskadenreaktoren.

Sind in Abhängigkeit von den Anforderungen an das Produkt nur geringe Mengen an nicht umgesetztem Ausgangssilan tolerabel, so wird vorzugsweise ein Rohrreaktor verwendet, da hierdurch das Problem der Rückmischung des Reaktionsmediums im Reaktor, die zur Anreicherung von Ausgangssilan im Zielprodukt führt, vermieden werden kann. Hierbei sind alle dem Stand der Technik entsprechenden Arten von statisch oder dynamisch durchmischten Rohrreaktoren einsetzbar, insbesondere solche, die im Innenaufbau mit Rührflügeln ausgerüstet sind, die von einer Rührwelle angetrieben werden können. In diesem Sinne sind bevorzugt solche Rohrreaktoren, die über die Länge durch Einbauten in einzelne Kammern unterteilt werden, welche durch jeweils mindestens ein von einer zentralen Welle angetriebenen Rührorgan durchmischt werden. Die Anzahl der Kammern liegt zwischen 2 und 200, bevorzugt zwischen 10 und 100 und besonders bevorzugt zwischen 20 und 80.

Mögliche Ausführungsformen für Kohlenwasserstoffreste von R¹, R³ und R⁴ sind unabhängig voneinander Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest; sowie durch Heteroatome wie N, O, S, P verknüpfte Kombinationen hiervon.

Bevorzugt ist maximal einer der Reste R³ oder R⁴ Wasserstoff.

Weiterhin können die Reste R³ und R⁴ direkt oder durch Heteroatome verbunden sein, so dass sich unter struktureller Einbeziehung des N-Atoms zyklische Strukturen -NR³R⁴ ergeben.

Beispiele hierfür sind der Morpholino-, Piperidino- oder Pyrrolidino-Rest, die auch bevorzugt sind. Darüber hinaus ist der Rest NR³R⁴ bevorzugt der N,N-Bis-(N',N'-dimethylaminopropyl)-Rest.

Vorzugsweise ist R¹ der Methyl-, Ethyl-, iso- und n-Propyl-, iso- und n-Butyl-, Pentyl-, Hexyl-, Heptyl-, Octyl-, Nonyl-, Decyl-, Phenyl-, Benzyl- oder Allyl-Rest.

Die Reste R³ und R⁴ werden vorzugsweise aus den bevorzugten Resten von R¹ sowie weiterhin aus Wasserstoff, Cylclohexyl- oder Phenyl-Resten ausgewählt. In einer besonders bevorzugten Ausführungsform ist der Rest R³ der Phenyl- oder Cyclohexylrest und der Rest R⁴ Wasserstoff.

Der Rest R hat die Bedeutung von R¹ oder OR¹. Vorzugsweise ist R der Methoxy-, Ethoxy-, iso- und n-Propoxy-, Butoxy-, Phenoxy-, Benzyloxy- oder Allyloxy-Rest.

Bei dem Rest R² handelt es sich bevorzugt um eine Methylen-, Ethylen- und Propylen-Gruppe, besonders bevorzugt um die Methylen-Gruppe.

Der Rest X hat die Bedeutung Chlor, Brom oder Iod, bevorzugt Chlor oder Brom, besonders bevorzugt Chlor.

n hat den Wert 0, 1, 2 oder 3, bevorzugt 1, 2 oder 3.

Vorzugsweise beträgt der Wassergehalt der einzusetzenden Amine der allgemeinen Formel (2) 0 bis 20000 ppm, bevorzugt 0 bis 5000 ppm, besonders bevorzugt 0 bis 1000 ppm.

Mit dem erfindungsgemäßen Verfahren konnten in einfacher Weise (N-Organylaminoorganyl)- und (N,N-Diorganylaminoorganyl)-triorganylsilane aus entsprechenden (Triorganylsilylorganyl)-halogeniden und N-Organyl- bzw. N,N-Diorganylaminen in quantitativer Ausbeute erhalten werden. Das Verfahren lässt sich insbesondere großtechnisch einfach und gefahrlos umsetzen.

Das unmittelbare Verfahrensprodukt des erfindungsgemäßen Verfahrens kann in optionalen zusätzlichen Verfahrensschritten noch weiter aufgearbeitet werden.

Vorzugsweise werden zunächst die nach der Einleitung der stickstoffhaltigen Verbindungen, insbesondere Ammoniak gebildeten Addukte, gegebenenfalls als Feststoffe abgetrennt.

Gegenstand der Erfindung ist weiter ein Verfahren, das einen oder mehrere der folgenden weiteren Schritte umfasst:
c) Entfernung des überschüssigen Amins im unmittelbaren Verfahrensprodukt
d) Zugabe eines unpolaren Lösemittels zur Ausfällung noch gelöster Ammonium-Verbindungen mit anschließender Entfernung der entstandenen Ammonium-Salze
e) Destillation des Produkts.

Die Reinheit der (N-Organylaminoorganyl)- und (N,N-Diorganylaminoorganyl)-triorganylsilane beträgt mindestens 85 %.

Diese Reinheit lässt sich mittels eines optionalen nachgelagerten Destillationsschritt e) des Produkts auf über 95 % steigern.

Überschüssiges Amin im Produkt kann in einem optionalen zusätzlichen Schritt c) entfernt werden, insbesondere unter Anwendung von vermindertem Druck.

Das erhaltene Roh-Produkt kann weiter in einem optionalen Schritt d) durch Zugabe eines unpolaren Lösemittels zur Ausfällung noch gelöster Ammonium-Verbindungen versetzt werden. Die so ausgefällten Ammonium-Salze lassen sich anschließend leicht entfernen. Auf diese Weise kann der Gehalt an ionogenen Halogeniden, insbesondere Chlorid oder Bromid, besonders stark reduziert werden und in einem gegebenenfalls durchgeführten Destillationschritt des Rohprodukts werden keine Ammoniumverbindungen in die Destillationsanlage verschleppt.

Das erfindungsgemäße Verfahren bietet gegenüber dem Stand der Technik insbesondere die Vorteile, dass die Reaktionszeiten durch die geeignete Wahl des Reaktionsparameters Prozesstemperatur überraschenderweise deutlich auf Reaktionsgeschwindigkeiten im Minutenbereich bei vollständigem Reaktionsumsatz verkürzt werden konnten. Gleichzeitig wird durch den Einsatz optimierter Überschüsse an Amin gemäß der allgemeinen Formel (2) die Bildung von Nebenprodukten signifikant reduziert. Darüber hinaus zeigt das kontinuierlich betriebene Verfahren gegenüber dem Stand der Technik die Vorteile, dass Produkte mit konstanter Zusammensetzung und Qualität erhalten werden. Außerdem stellt sich das Verfahren auch aus Sicht der Betriebssicherheit der hier genannten exothermen Reaktionen deutlich günstiger dar, da das Reaktorvolumen im kontinuierlichen Betrieb gegenüber diskontinuierlich durchgeführtem Verfahren bei gleich bleibender Menge an Zielprodukt erheblich geringer sein kann (Verringerung der Gefahrenlast).

In den folgenden Beispielen sind, falls jeweils nicht anders angegeben, alle Mengen- und Prozentangaben auf das Gewicht bezogen und alle Drücke auf 0,10 MPa (abs.).

### Beispiele

### Vergleichsbeispiel 1 (nicht erfindungsgemäß)

In einem 500 ml-Vierhalskolben mit Rückflusskühler, KPG-Rührer, Thermometer und Gaseinleitungsrohr wurden 298 g trockenes Anilin auf 130°C erhitzt und innerhalb von 60 min unter Rühren mit 124 g (Chlormethyl)methyldimethoxysilan versetzt. Nach Beendigung der Zugabe leitete man bei gleichbleibender Temperatur solange unter Rühren Ammoniak durch die Mischung, bis keine weitere Umsetzung mehr zu beobachten war (ca. 60 min). Daraufhin wurde überschüssiges Anilin unter vermindertem Druck entfernt, die Suspension auf 30°C abgekühlt und sodann mit 150 ml iso-Hexan versetzt. Anschließend filtrierte man den entstandenen weißen Niederschlag über eine Drucknutsche und wusch mit zweimal 80 ml iso-Hexan nach. Filtrat und Waschlösungen wurden vereinigt und unter vermindertem Druck vom Lösemittel befreit. Die anschließende fraktionierte Destillation ergab 160 g (Ausbeute 95 %) (N-Phenylaminomethyl)dimethoxy(methyl)silan mit einem ChloridGehalt von < 20 ppm.

### Beispiel 2

In einen Rohrreaktor (3,60 m Länge, 0,05 m Innendurchmesser) mit rotierender Rührwelle (ca. 800-1200 Umdrehungen pro Minute), an die insgesamt 60 Rührflügel der Höhe 0,01 m im Abstand von 0,06 m angebracht sind, wurden gleichmäßig vier Teile trockenes Anilin, ein Teil (Chlormethyl)dimethoxy(methyl) silan sowie ein Teil Ammoniak bei einer Temperatur von 170°C so zudosiert, dass sich eine mittlere Verweilzeit der Mischung im Reaktor von 10 Minuten ergab. Die so erhaltene Roh-Mischung wurde analog zu Beispiel 1 aufgearbeitet, wobei identische Ausbeuten und Produkt-Reinheiten erhalten wurden.

### Beispiel 3

Beispiel 2 wurde mit der Abänderung wiederholt, dass Anilin, (Chlormethyl)dimethoxy(methyl)silan und Ammoniak bei einer Temperatur von 185°C so zudosiert wurden, so dass sich eine mittlere Verweilzeit der Mischung im Reaktor von 5 Minuten ergab. Die so erhaltene Roh-Mischung wurde analog zu Beispiel 1 aufgearbeitet, wobei identische Ausbeuten und Produkt-Reinheiten erhalten wurden.

## Patentansprüche

1. Verfahren zur Herstellung von (N-Organylaminoorganyl)- und (N,N-Diorganylaminoorganyl)triorganylsilanen der allgemeinen Formel (1)
R₃₋ₙR¹ ₙSi-R²-NR³R⁴ (1)
wobei
**R** ein Kohlenwasserstoff- oder ein Alkoxyrest mit 1-10 C-Atomen, der gesättigt oder ungesättigt, verzweigt oder unverzweigt, substituiert oder unsubstituiert sein kann, bedeutet,
**R¹** ein Kohlenwasserstoffrest mit 1-10 C-Atomen, der gesättigt oder ungesättigt, verzweigt oder unverzweigt, substituiert oder unsubstituiert sein kann, bedeutet
**R²** ein Kohlenwasserstoffrest mit 1-10 C-Atomen, der gesättigt oder ungesättigt, verzweigt oder unverzweigt, substituiert oder unsubstituiert sein kann, bedeutet,
**R³, R⁴** Wasserstoff oder einen Kohlenwasserstoffrest mit 1-10 C-Atomen, der gesättigt oder ungesättigt, verzweigt oder unverzweigt, substituiert oder unsubstituiert sein kann, bedeuten, mit der Maßgabe, dass **R³, R⁴** gleich oder verschieden sein können und gegebenenfalls miteinander verbunden sind, wobei der resultierende Cyclus auch Heteroatome enthalten kann,
**X** Chlor, Brom oder Iod bedeutet
**n** eine Zahl gleich 1, 2 oder 3 bedeutet
durch Umsetzung von cyclischen oder acyclischen Aminen der allgemeinen Formel (2)
H-NR³R⁴, (2)
die einen Wassergehalt von 0 bis 20000 ppm aufweisen,
mit (Halogenorganyl)silanen der allgemeinen Formel (3)
R₃₋ₙR¹ ₙSi-R²-X (3)
**dadurch gekennzeichnet, dass** die Umsetzung die folgenden Schritte umfasst
a) gleichmäßige Zugabe des (Halogenorganyl)silans der allgemeinen Formel (3) und des Amins der allgemeinen Formel (2) in einen kontinuierlich betriebenen Reaktor bei einer Temperatur von 50 bis 250°C, wobei die Verweilzeit der eingesetzten Reaktanden im Reaktor zwischen 1 min und 120 min beträgt und das Amin der allgemeinen Formel (2) mit einem 1- bis 100-fachen Überschuss eingesetzt wird,
b) und gegebenenfalls zusätzliche Zugabe von stickstoffhaltigen Verbindungen gleichzeitig oder zeitlich versetzt zur Zugabe des (Halogenorganyl)silans und des Amins und Abtrennung der entstandenen Addukte.

2. Verfahren gemäß Anspruch 1, **dadurch gekennzeichnet, dass** das Verfahren in einem statisch oder dynamisch durchmischten Rohrreaktor durchgeführt wird.

3. Verfahren gemäß Anspruch 1 oder 2, **dadurch gekennzeichnet, dass** der Wassergehalt der eingesetzten Amine der allgemeinen Formel (2) 0 bis 1000 ppm beträgt.

4. Verfahren gemäß einem oder mehreren der Ansprüche 1 bis 3, **dadurch gekennzeichnet, dass** die Reste R³ und R⁴ unabhängig voneinander ausgewählt werden aus der Gruppe enthaltend Cyclohexyl, Phenyl und Wasserstoff oder direkt oder durch Heteroatome verbunden sind, so dass sich unter struktureller Einbeziehung des N-Atoms zyklische Strukturen -NR³R⁴ ergeben.

5. Verfahren nach Anspruch 4, **dadurch gekennzeichnet, dass** die zyklische Struktur -NR³R⁴ einen Morpholino-, Piperidino- oder Pyrrolidinorest bedeutet.

6. Verfahren gemäß einem oder mehreren der Ansprüche 1 bis 5, **dadurch gekennzeichnet, dass** die eingesetzte stickstoffhaltige Verbindung gemäß dem optionalen Verfahrenschritt b) Ammoniak ist.

7. Verfahren nach einem oder mehreren der Ansprüche 1 bis 6, **dadurch gekennzeichnet, dass** das Verfahren einen oder mehrere der folgenden weiteren Schritte umfasst:
c) Entfernung des überschüssigen Amins im unmittelbaren Verfahrensprodukt
d) Zugabe eines unpolaren Lösemittels zur Ausfällung noch gelöster Ammonium-Verbindungen mit anschließender Entfernung der entstandenen Ammonium-Salze
e) Destillation des Produkts.

## Claims

1. Process for preparing N-(organylaminoorganyl)- and (N,N-diorganylaminoorganyl)triorganylsilanes of the general formula (1)
R₃₋ₙR¹ ₙsi-R²-NR³R⁴ (1)
where
**R** is a hydrocarbon radical or an alkoxy radical which has 1-10 carbon atoms and may be saturated or unsaturated, branched or unbranched, substituted or unsubstituted,
**R¹** is a hydrocarbon radical which has 1-10 carbon atoms and may be saturated or unsaturated, branched or unbranched, substituted or unsubstituted,
**R²** is a hydrocarbon radical which has 1-10 carbon atoms and may be saturated or unsaturated, branched or unbranched, substituted or unsubstituted,
**R³, R⁴** are each hydrogen or a hydrocarbon radical which has 1-10 carbon atoms and may be saturated or unsaturated, branched or unbranched, substituted or unsubstituted, with the proviso that **R³**, **R⁴** may be the same or different and are optionally bonded to one another, in which case the resulting cycle may also contain heteroatoms,
**X** is chlorine, bromine or iodine,
**n** is equal to 1, 2 or 3
by reacting cyclic or acyclic amines of the general formula (2)
H-NR³R⁴ (2)
which have a water content of from 0 to 20 000 ppm
with (haloorganyl)silanes of the general formula (3)
R₃₋ₙR¹ ₙSi-R²-X (3)
**characterized in that** the reaction comprises the following steps:
a) uniformly adding the (haloorganyl)silane of the general formula (3) and the amine of the general formula (2) to a continuously operated reactor at a temperature of from 50 to 250°C, the residence time of the reactants used in the reactor being between 1 min and 120 min and the amine of the general formula (2) being used with a 1- to 100-fold excess,
b) and optionally additionally adding nitrogen compounds simultaneously with or offset in time from the addition of the (haloorganyl)silane and of the amine and removing the adducts formed.

2. Process according to Claim 1, **characterized in that** the process is performed in a statically or dynamically mixed tubular reactor.

3. Process according to Claim 1 or 2, **characterized in that** the water content of the amines of the general formula (2) used is from 0 to 1000 ppm.

4. Process according to one or more of Claims 1 to 3, **characterized in that** the R³ and R⁴ radicals are each independently selected from the group comprising cyclohexyl, phenyl and hydrogen, or are bonded directly or by heteroatoms, so as to give rise to cyclic -NR³R⁴ structures with structural inclusion of the nitrogen atom.

5. Process according to Claim 4, **characterized in that** the cyclic -NR³R⁴ structure is a morpholino, piperidino or pyrrolidino radical.

6. Process according to one or more of Claims 1 to 5, **characterized in that** the nitrogen compound used in the optional process step b) is ammonia.

7. Process according to one or more of Claims 1 to .6, **characterized in that** the process comprises one or more of the following further steps:
c) removing the excess amine in the direct process product
d) adding a nonpolar solvent to precipitate ammonium compounds still dissolved with subsequent removal of the ammonium salts formed
e) distilling the product.

## Revendications

1. Procédé de préparation de (N-organylaminoorganyl)triorganylsilanes et de (N,N-diorganylaminoorganyl)triorganylsilanes de formule générale (1)
R₃₋ₙR¹ ₙSi-R²-NR³R⁴ (1)
où
R signifie un radical hydrocarboné ou alcoxy comprenant 1-10 atomes de carbone, qui peut être saturé ou insaturé, ramifié ou non ramifié, substitué ou non substitué,
R¹ signifie un radical hydrocarboné comprenant 1-10 atomes de carbone, qui peut être saturé ou insaturé, ramifié ou non ramifié, substitué ou non substitué,
R² signifie un radical hydrocarboné comprenant 1-10 atomes de carbone, qui peut être saturé ou insaturé, ramifié ou non ramifié, substitué ou non substitué,
R³,R⁴ signifient hydrogène ou un radical hydrocarboné comprenant 1-10 atomes de carbone, qui peut être saturé ou insaturé, ramifié ou non ramifié, substitué ou non substitué, à condition que R³, R⁴ puissent être identiques ou différents et puissent le cas échéant être reliés l'un à l'autre, le cycle obtenu pouvant également contenir des hétéroatomes,
X signifie chlore, brome ou iode,
n vaut un nombre égal à 1, 2 ou 3
par transformation d'amines cycliques ou acycliques de formule générale (2)
H-NR³R⁴, (2)
qui présentent une teneur en eau de 0 à 20 000 ppm, avec des (halogénoorganyl)silanes de formule générale (3)
R₃₋ₙR¹ ₙSi-R²-X (3)
**caractérisé en ce que** la transformation présente les étapes suivantes
a) addition régulière du (halogénoorganyl)silane de formule générale (3) et de l'amine de formule générale (2) dans un réacteur opéré en continu à une température de 50 à 250°C, le temps de séjour des réactifs utilisés dans le réacteur étant compris entre 1 min et 120 min et l'amine de formule générale (2) étant utilisée avec un excès d'un facteur 1 à 100,
b) et le cas échéant addition supplémentaire de composés contenant de l'azote, simultanément ou de manière décalée dans le temps par rapport à l'addition de l'(halogénoorganyl)silane et de l'amine et séparation des produits d'addition formés.

2. Procédé selon la revendication 1, **caractérisé en ce que** le procédé est réalisé dans un réacteur tubulaire agité statiquement ou dynamiquement.

3. Procédé selon la revendication 1 ou 2, **caractérisé en ce que** la teneur en eau de l'amine utilisée de formule générale (2) est de 0 à 1000 ppm.

4. Procédé selon l'une ou plusieurs des revendications 1 à 3, **caractérisé en ce que** les radicaux R³ et R⁴ sont choisis, indépendamment l'un de l'autre, dans le groupe contenant cyclohexyle, phényle et hydrogène ou sont liés directement ou par des hétéroatomes, de telle manière qu'on obtient, en incluant structurellement l'atome N, des structures cycliques -NR³R⁴.

5. Procédé selon la revendication 4, **caractérisé en ce que** la structure cyclique -NR³R⁴ signifie un radical morpholino, pipéridino ou pyrrolidino.

6. Procédé selon l'une ou plusieurs des revendications 1 à 5, **caractérisé en ce que** le composé contenant de l'azote utilisé selon l'étape de procédé b) éventuelle est de l'ammoniaque.

7. Procédé selon l'une ou plusieurs des revendications 1 à 6, **caractérisé en ce que** le procédé comprend une ou plusieurs des étapes suivantes :
c) élimination de l'amine en excès dans le produit de procédé direct
d) addition d'un solvant non polaire pour la précipitation des composés d'ammonium encore dissous avec élimination consécutive des sels d'ammonium formés
e) distillation du produit.
